# EUROPÄISCHE PATENTANMELDUNG

(11) **EP 2 800 251 A1**
(43) Veröffentlichungstag der Anmeldung: **05.11.2014**
(21) Anmeldenummer: 13165795.9
(22) Anmeldetag: 29.04.2013
(51) Int. Cl.: H02K 5/15, H02K 9/04, H02K 9/06, H02K 9/08, H02K 9/10, H02K 9/12, H02K 9/18

(54) **Elektrische Maschine mit einem Lagerschild**

(71) Anmelder: Siemens Aktiengesellschaft, 80333 München (DE)
(72) Erfinder: Joseph, Eric, 91238 Offenhausen (DE); Grillenberger, Reiner, 91575 Windsbach (DE); Koch, Thomas, 90459 Nürnberg (DE)

(57) **Zusammenfassung**

Die Erfindung betrifft eine elektrische Maschine (1,501, 601,701) die ein erstes Lagerschild (2), einen ersten Abschnitt (3) und einen Rotor (4) umfasst, wobei der Rotor (4)in dem ersten Abschnitt (3) und in dem ersten Lagerschild (2) drehbar gelagert ist und sich in einer axialen Richtung (70) entlang einer Drehachse (105) erstreckt, wobei das erste Lagerschild (2) eine innere Tragvorrichtung (21), eine Lageraufnahme (22), die in radialen Richtungen (71,72) durch die innere Tragvorrichtung (21) begrenzt ist, einen Anbauflansch (28), der eine Kammer (29) umfasst, und eine äußere Tragvorrichtung (23,24) aufweist, die sich an die innere Tragvorrichtung (21) in radialen Richtungen (71,72) anschließt, und Durchtrittsöffnungen (25,26) an der Kammer (29) zur Kühlung des ersten Abschnitts (3) aufweist, wobei die Kammer (29) eine radiale (27) und eine axiale Öffnung (30) aufweist, ein Lagerschild (2) für eine elektrische Maschine (1,501,601, 701), das erste Lagerschild (2) ist, sowie eine Serie von elektrischen Maschinen (1,501,601,701) umfassend mindestens eine erste elektrische Maschine (1,601) und mindestens eine zweite elektrische Maschine (501,701).

## Beschreibung

Die Erfindung betrifft eine elektrische Maschine gemäß dem Oberbegriff des Patentanspruchs 1 und ein Lagerschild für die elektrische Maschine. Ferner betrifft die Erfindung eine Serie von elektrischen Maschinen gemäß dem Oberbegriff des Patentanspruchs 1.

Aus der DE 89 15 650 U1 ist ein Elektromotor bekannt, bei dem die Lagerschilde an mindestens drei gegeneinander um jeweils 90° am Umfang versetzten Seiten Aufstellfüße oder Aufstellflächen aufweisen. Die Lagerschilde in Kastenform haben auf drei Seiten Aufstellflächen an einer Fläche bzw. Seite eine Anschlusskastenöffnung und an einer oder den beiden gegenüberliegenden Seiten Nuten für den Anbau von Fremdlüftern oder Gittern. So können die Lagerschilde bei einer elektrischen Maschine um ein Vielfaches von 90° gegeneinander verdreht angeordnet werden, so dass die Anschlusskasten-Öffnungen der beiden Lagerschilde gegeneinander verdreht an verschiedenen Seiten sind. Dadurch, dass der Elektromotor an drei Seiten Aufstellflächen aufweist, kann er bei einer Lageveränderung auf die Aufstellflächen gestellt werden, die zu einer optimalen Lage des Anschlusskastens oder der Anschlusskästen führen. Es lässt sich dabei eine Standardisierung der Lagerschilde erreichen, indem beide Lagerschilde identisch ausgebildet sind.

Eine derartige elektrische Maschine wird zur Umwandlung von elektrischer in mechanische Energie und umgekehrt eingesetzt. Bei der Umwandlung von mechanischer in elektrische Energie wird die elektrische Maschine als Generator eingesetzt. Bei der Umwandlung von elektrischer in mechanische Energie wird die elektrische Maschine als Motor eingesetzt. Die elektrische Maschine weist hierfür je nach Leistungsanforderung an die elektrische Maschine, deren Abmessungen, sowie den Umgebungsbedingungen eine Kühlvorrichtung auf.

So sind z.B. aus der WO 2012/159660 A2 elektrische Maschinen bekannt, die auf einem Plattformkonzept beruhen, das sämtliche Kühlarten einzeln oder in Kombination, wie z.B. eigen- oder fremdbelüftet, wassergekühlt oder wassergekühlt mit Fremdbelüftung, als auch einen separaten Aufsatzkühler realisierbar machen. Je nach Einsatzort und klimatischen Anforderungen lassen sich somit in einfacher Art und Weise die elektrischen Maschinen bei optimalem Wirkungsgrad an die Gegebenheiten anpassen. Das Plattformkonzept der WO 2012/159660 A2 ermöglicht die Verwendung weniger aufwändiger Lagerschilde, die an den Anschlussabschnitten des selbsttragenden Gehäuses der elektrischen Maschine angeordnet werden.

Da eine an die Ausführungen der elektrischen Maschine angepasste Kühlung wesentlich für eine Leistungsfähigkeit der elektrischen Maschine ist, ist es wichtig, einen weiteren technischen Beitrag zu leisten, der allein, alternativ oder in Kombination mit bekannten Maßnahmen es ermöglicht, eine elektrische Maschine zur Verfügung zu stellen, bei der in einfacher Weise verschiedene Kühlarten verbessert realisierbar sind.

Der Erfindung liegt daher die Aufgabe zugrunde, eine elektrische Maschine zur Verfügung zu stellen, bei der verschiedene Kühlungsarten in einfacher Weise verbessert realisierbar sind.

Die Aufgabe wird durch eine elektrische Maschine mit den Merkmalen des Anspruchs 1 gelöst.

Eine erfindungsgemäße elektrische Maschine umfasst ein erstes Lagerschild, einen ersten Abschnitt und einen Rotor, wobei der Rotor in dem ersten Abschnitt und in dem ersten Lagerschild drehbar gelagert ist und sich in einer axialen Richtung entlang einer Drehachse erstreckt, wobei das erste Lagerschild
- eine innere Tragvorrichtung,
- eine Lageraufnahme, die in radialen Richtungen durch die innere Tragvorrichtung begrenzt ist,
- einen Anbauflansch, der eine Kammer umfasst, und
- eine äußere Tragvorrichtung aufweist, die sich an die innere Tragvorrichtung in radialen Richtungen anschließt, und Durchtrittsöffnungen an der Kammer zur Kühlung des ersten Abschnitts aufweist, wobei die Kammer eine radiale und eine axiale Öffnung aufweist.

Die Aufgabe wird auch durch ein Lagerschild für eine elektrische Maschine mit den Merkmalen nach Anspruch 13 gelöst.

Bei einem erfindungsgemäßen Lagerschild für eine erfindungsgemäße elektrische Maschine ist das Lagerschild das erste Lagerschild.

Ferner wird die Aufgabe durch eine Serie von elektrischen Maschinen mit den Merkmalen nach Anspruch 14 gelöst.

Eine erfindungsgemäße Serie von elektrischen Maschinen umfasst mindestens eine erste und eine zweite erfindungsgemäße elektrische Maschine.

Die erfindungsgemäße elektrische Maschine löst die Aufgabe vorteilhaft, indem ein und dasselbe erste Lagerschild durch die axiale Öffnung, die radiale Öffnung, die Kammer und Durchtrittsöffnung es ermöglichen, bei verschiedenen Kühlarten ein Kühlmittel vorteilhaft durch die äußere Tragvorrichtung in den ersten Abschnitt zu leiten. Außerdem wird durch das erste Lagerschild ein vorteilhafter Aufbau der elektrischen Maschine in einfacher Weise verbessert ermöglicht. Die elektrische Maschine kann vorteilhaft platzsparend an einem Aufstellort angeordnet werden.

Die verschiedenen Kühlarten bei der elektrischen Maschine können gasförmige oder flüssige Kühlmittel zur Kühlung des ersten Abschnitts verwenden. Das erste Lagerschild wird besonders vorteilhaft erfindungsgemäß bei einer Kühlung des ersten Abschnitts mit einem gasförmigen Kühlmittel verwendet. Vorteilhaft kann das gasförmige Kühlmittel in einfacher Weise Luft sein, da hierzu keine Trennung des Kühlmittels von der Umwelt notwendig ist. Eine Kühlung des ersten Abschnitts mit einem flüssigen Kühlmittel kann den vorteilhaften Aufbau der erfindungsgemäßen elektrischen Maschine bzw. des erfindungsgemäßen elektrischen Lagerschilds in einfacher Weise als Grundkonstruktion nutzen.

Die axiale Öffnung kann sich an einem zweiten axialen Ende der Kammer befinden, wobei sich die Kammer in der axialen Richtung von einem ersten axialen Ende zu dem zweiten axialen Ende erstreckt und die Kammer das erste axiale Ende an der äußeren Tragvorrichtung aufweist. Die radiale Öffnung befindet sich an dem Anbauflansch zwischen dem ersten und dem zweiten axialen Ende. Das gasförmige Kühlmittel kann so bei ersten Kühlarten vorteilhaft von der axialen Öffnung direkt in die Kammer strömen und die Kammer direkt durch die Durchtrittsöffnungen der äußeren Tragvorrichtung verlassen und bei zweiten Kühlarten vorteilhaft von der radialen Öffnung direkt in die Kammer strömen und die Kammer direkt durch die Durchtrittsöffnungen der äußeren Tragvorrichtung verlassen

Das gasförmige Kühlmittel kann durch die Durchtrittsöffnungen vorteilhaft in axialer Richtung aus der Kammer in den ersten Abschnitt der elektrischen Maschine einströmen. So strömt das Kühlmittel bereits in den ersten Abschnitt der elektrischen Maschine in eine in dem ersten Abschnitt bevorzugte axiale Strömungsrichtung ein.

Wenn bei einer Kühlart die Durchtrittsöffnungen der Kammer zur Kühlung mit einem gasförmigen Kühlmittel sind, weist der erste Abschnitt der elektrischen Maschine neben einer Öffnung für das erste Lagerschild eine weitere Öffnung zur Kühlung auf. Es kann so vorteilhaft in einfacher Weise ein Kühlkreislauf, der durch das erste Lagerschild und den ersten Abschnitt der elektrischen Maschine verläuft außerhalb des ersten Abschnitts der elektrischen Maschine und des ersten Lagerschild geschlossen werden.

Die radialen Richtungen sind Richtungen, die senkrecht zur Drehachse bzw. zu der axialen Richtung verlaufen. Eine Orientierung einer Fläche wird durch die Orientierung ihres Projektionsvektors ausgedrückt, der eine Projektion der Fläche auf einer Ebene beschreibt, so dass die projizierten Ränder der Öffnung eine maximale Fläche umschließen. Die Ebene hat dabei einen Normalenvektor der parallel zum Projektionsvektor verläuft. So ist z.B. die axiale Öffnung eine Öffnung deren Ränder bei einer Projektion in axialer Richtung auf einer Ebene mit Normalenvektor in axialer Richtung eine maximale Fläche umschließen. Ränder der radialen Öffnung umschließen bei einer Projektion in einer radialen Richtung auf einer Ebene mit Normalenvektor in der radialen Richtung eine maximale Fläche. Für eine axiale oder radiale Fläche entstehen analog zu einer Öffnung die projizierten Ränder durch Ränder, die die Fläche umschließen.

Das erste Lagerschild kann einen axialen Umriss mit einer Grundform aufweisen, die eckig oder rund ist. Eine eckige Grundform ermöglicht in einfacherer Weise eine Positionierung des ersten Lagerschildes mit der radialen Öffnung relativ zu dem ersten Abschnitt bei einer Montage des ersten Lagerschildes an dem ersten Abschnitt. Der axiale Umriss entsteht durch Projektion des ersten Lagerschildes in axialer Richtung auf eine axiale Ebene.

Bei dem ersten Lagerschild können die innere Tragvorrichtung, die Lageraufnahme, der Anbauflansch und die Kammer stoffschlüssig verbunden sein. So können verschiedene Kühlungsarten in einfacher Weise verbessert realisierbar sein. Unter anderem können die Durchtrittsöffnungen der äußeren Tragvorrichtung hierzu aufgrund der platzsparenden stoffschlüssigen Verbindungen größere Öffnungsquerschnitte bei hoher mechanischer Stabilität des ersten Lagerschildes aufweisen, so dass eine größere Menge des Kühlmittels zur Kühlung in den ersten Abschnitt der elektrischen Maschine einströmen kann. Vorteilhaft platzsparend können auch Haltevorrichtungen für Überwachung oder/und Wartung eines Lagers oder/und einer Befestigung eines Gebers zur Detektion von Messgrößen an einer Welle des Rotors stoffschlüssig mit dem ersten Lagerschild verbunden sein, wobei die Welle durch das Lager in dem ersten Lagerschild drehbar gelagert ist. Das erste Lagerschild kann stoffschlüssig durch eine spanabhebende Herstellung, z.B. durch Fräsen, aus einem Stück Material oder durch ein Gießverfahren aus einem flüssigen Werkstoff hergestellt sein. Die Herstellung durch ein Gießverfahren aus einem flüssigen Werkstoff ermöglicht in einfacher Weise das erste Lagerschild als Gussteil für verschiedene Kühlungsarten in einfacher Weise kostengünstig verbessert herzustellen.

Bei einem Betrieb einer erfindungsgemäßen elektrischen Maschine als Generator wird der Rotor durch mechanische Energie in Drehung versetzt. Durch ein magnetisches Zusammenwirken zwischen dem Rotor und einem Stator über einen Luftspalt, der in radialen Richtungen, die senkrecht zur axialen Richtung orientiert sind, durch den Stator und den Rotor begrenzt ist, kann die mechanische in elektrische Energie umgewandelt werden. Die elektrische Energie kann an einer Wicklung, die am Luftspalt angeordnet ist, durch Anschließen eines elektrischen Verbrauchers entnommen werden. Die Wicklung kann hierbei am Stator befestigt sein. Bei einem Betrieb einer erfindungsgemäßen elektrischen Maschine als Motor wird über die Wicklung elektrische Energie zugeführt und durch das magnetische Zusammenwirken zwischen Stator und Rotor elektrische Energie in mechanische Energie umgewandelt. Dabei wird der Rotor in Drehung versetzt und es kann an der Welle mechanische Energie an einen mechanischen Verbraucher in Form einer Drehbewegung abgegeben werden. Auch hier kann die Wicklung am Stator befestigt sein.

Der Rotor weist eine entsprechende Einrichtung auf, um über den Luftspalt mit dem Stator magnetisch zusammenwirken zu können. Die Einrichtung kann hierfür einen Permanentmagneten und/oder eine Wicklung aufweisen.

Die Durchtrittsöffnungen der äußeren Tragvorrichtung und die Kammer können sich symmetrisch zur Drehachse in Bereichen erstrecken, die von der Drehachse in radialen Richtungen weiter entfernt sind als der Luftspalt. So kann sich das Kühlmittel vorteilhaft in der Kammer ausbreiten und durch die Durchtrittsöffnungen in den erste Abschnitt der elektrischen Maschine durch die Öffnung der elektrischen Maschine für das erste Lagerschild in radialen Richtungen besser verteilt zur Kühlung einströmen.

Ein erfindungsgemäßes Lagerschild weist den weiteren Vorteil auf, dass es eine Konstruktion aufweist, die auf einfacher Weise in großen Stückzahlen für verschiedene Kühlungsartenhergestellt werden kann. So können vorteilhaft bei einer elektrischen Maschine verschiedene Kühlungsarten in einfacher Weise verbessert realisiert werden.

Eine erfindungsgemäße Serie von elektrischen Maschinen weist den weiteren Vorteil auf, dass ein einziges erfindungsgemäßes Lagerschild für elektrische Maschinen unterschiedlicher Kühlarten verwendet werden kann. Insbesondere kann das einziges erfindungsgemäßes Lagerschild sowohl für eine Kühlart mit einem in axialer Richtung in die elektrische Maschine einströmenden Kühlmittel verwendet werden als auch für eine Kühlart mit einem in radialer Richtung in die elektrische Maschine einströmenden Kühlmittel verwendet werden. Es ist so eine Serie von elektrischen Maschinen mit verschiedenen Kühlungsarten in einfacher Weise verbessert realisierbar.

Vorteilhafte Ausgestaltungen der Erfindung sind in den abhängigen Ansprüchen angegeben.

So ist eine Ausgestaltung der erfindungsgemäßen elektrischen Maschine vorteilhaft, bei der die Lageraufnahme in der axialen Richtung zwischen dem ersten Abschnitt der elektrischen Maschine und der Kammer angeordnet ist. So wird vorteilhaft in einfacher Weise verbessert bei den ersten Kühlarten und den zweiten Kühlarten die Kammer zur Kühlung in gleicher Weise genutzt. Das gasförmige Kühlmittel kann so bei den ersten Kühlarten in einer ersten Reihenfolge die axiale Öffnung, die Kammer, die Durchtrittsöffnungen der äußeren Tragvorrichtung und den ersten Abschnitt der elektrischen Maschine durchströmen und bei den zweiten Kühlarten in einer zweiten Reihenfolge die radiale Öffnung, die Kammer, die Durchtrittsöffnungen der äußeren Tragvorrichtung und den ersten Abschnitt der elektrischen Maschine durchströmen. Die Kammer ist so vorteilhaft in der ersten Reihenfolge und der zweiten Reihenfolge an derselben Position angeordnet, so dass sich ein Weg des Kühlmittels durch die elektrische Maschine bei den ersten Kühlungsarten und zweiten Kühlungsarten im geringeren Maße unterscheidet. Dies ermöglicht die verschiedenen Kühlarten in einfacher Weise verbessert vorteilhaft zu realisieren.

Die axiale Öffnung kann sich vorteilhaft bis auf verbleibende Befestigungsstege oder punktuelle Befestigungsvorrichtungen über eine axiale Fläche des ersten Lagerschildes erstrecken und die radiale Öffnung kann sich vorteilhaft bis auf verbleibende Befestigungsstege oder punktuelle Befestigungsvorrichtungen über eine radiale Fläche des ersten Lagerschildes erstrecken. Dies führt in Verbindung mit der Lageraufnahme, die zwischen dem ersten Abschnitt der elektrischen Maschine und der Kammer angeordnet ist zu einem großflächigen Einströmen des Kühlmittels in die Kammer. So werden die verschiedenen Kühlungsarten in einfacher Weise verbessert realisierbar.

In einer weiteren vorteilhaften Ausgestaltung einer erfindungsgemäßen elektrischen Maschine begrenzen Innenseiten von Außenwänden des ersten Lagerschilds die Kammer in radialen Richtungen. So hat die Kammer vorteilhaft eine maximierte Erstreckung innerhalb des axialen Umriss des ersten Lagerschilds. Das Kühlmittel kann sich innerhalb des axialen Umrisses vorteilhaft verteilt ausbreiten und bei verschiedenen Kühlarten zu einer in einfacher Weise verbesserten Kühlung des ersten Abschnitts der elektrischen Maschine führen. Vorteilhaft können hierzu die Außenwände an der Kammer eine annähernd gleiche Dicke aufweisen.

In einer weiteren vorteilhaften Ausgestaltung einer erfindungsgemäßen elektrischen Maschine fluchten die Außenwände des ersten Lagerschilds mit einer äußeren Berandung des ersten Abschnitts. Dies ermöglicht vorteilhaft, dass das Kühlmittel im großen Maße aus dem ersten Lagerschild in einen Innenraum des ersten Abschnitts strömen kann und dort den Stator direkt kühlen kann. Es geht wenig, insbesondere keine Kühlleistung verloren, indem das Kühlmittel aus dem ersten Lagerschild außerhalb der äußeren Berandung entlang strömt, die den Innenraum des ersten Abschnitts umgibt und eine Gehäuse sein kann. Der Innenraum des ersten Abschnitts umfasst den Stator und den Rotor. Das erste Lagerschild kann für eine kühlmitteldichtere Verbindung zwischen ersten Lagerschild und der äußeren Berandung an der Öffnung für das erste Lagerschild eine entsprechende Vorrichtung aufweisen.

In einer weiteren vorteilhaften Ausgestaltung einer erfindungsgemäßen elektrischen Maschine ist die äußere Tragvorrichtung durch Streben gebildet, die die Durchtrittsöffnungen der äußeren Tragvorrichtung voneinander trennen. So können die Durchtrittsöffnungen große Öffnungsquerschnitte bei hoher mechanischer Stabilität aufweisen, so dass eine größere Menge des Kühlmittels zur Kühlung in den ersten Abschnitt der elektrischen Maschine einströmen kann. Die Streben verlaufen hierfür vorteilhaft in radialen Richtungen.

Vorteilhaft können die Streben an Seiten des axialen Umrisses als mehrere dünne Streben ausgebildet sein. Dünn bezieht sich dabei auf die Dicke der dünnen Streben in einer tangentialen Richtung senkrecht zu einer radialen und axialen Richtung. Dünn heißt insbesondere bei den mehreren dünnen Streben, dass eine Durchtrittsöffnung der äußeren Tragvorrichtung zwischen zwei der mehreren dünnen Streben in der tangentialen Richtung eine größere Erstreckung als die Dicke der mehreren dünnen Streben aufweist.

Die äußere Tragvorrichtung kann die mehreren dünnen Streben vorteilhaft an ersten Stellen aufweisen, an denen die Außenwände in radialer Richtung näher an der Drehachse sind als an anderen Stellen. An den ersten Stellen werden die verschiedenen Kühlungsarten in einfacher Weise verbessert, da das Kühlmittel an den ersten Stellen eine bessere Kühlwirkung für den Stator, insbesondere für die Wicklung des Stators entfaltet.

In einer weiteren vorteilhaften Ausgestaltung einer erfindungsgemäßen elektrischen Maschine verjüngt sich zumindest eine Strebe in radialen Richtungen zur Lageraufnahme hin. So kann die sich verjüngende Strebe eine Befestigungsvorrichtung aufweisen und vorteilhaft benachbarte Durchtrittsöffnungen der äußeren Tragvorrichtung für in einfacher Weise verbesserte Kühlarten trennen. Unter anderem haben die durch die verjüngende Strebe getrennten Durchtrittsöffnungen in radialen Richtungen zur Lageaufnahme hin größere Öffnungsquerschnitte als wenn die Strebe sich nicht verjüngen würde. Die Befestigungsvorrichtung kann bei der sich verjüngenden Strebe sich in einem in radialer Richtung außen gelegen Bereich der Strebe befinden. So können die Außenwände fluchtend mit der äußeren Berandung für in einfacher Weise verbesserte Kühlarten durch die Befestigungsvorrichtung besser befestigt werden.

In einer weiteren vorteilhaften Ausgestaltung einer erfindungsgemäßen elektrischen Maschine weist die Kammer eine Durchtrittsöffnung zur Kühlung der elektrischen Maschine auf. So kann das Kühlmittel vorteilhaft in die Kammer einströmen, sich dort vorteilhaft ausbreiten und vorteilhaft durch die Durchtrittsöffnungen der äußeren Tragvorrichtung in den ersten Abschnitt der elektrischen Maschine einströmen.

In einer weiteren vorteilhaften Ausgestaltung einer erfindungsgemäßen elektrischen Maschine ist an der Durchtrittsöffnung der Kammer ein Lüfter zur Kühlung des ersten Abschnitts angeordnet. So kann vorteilhaft ein Kühlmittelstrom des Kühlmittels in der Nähe der elektrischen Maschine, insbesondere direkt an der Durchtrittsöffnung, erzeugt werden. So treten geringe Strömungsverluste vor einem Einströmen des Kühlmittels in das erste Lagerschild auf. Der Lüfter kann vorteilhaft ein Gehäuse umfassen, an dem alle Komponenten des Lüfters befestigt sind und das am ersten Lagerschild befestigt sein kann, um in einfacher Weise verbessert verschiedene Kühlarten zu realisieren. Der Lüfter kann vorteilhaft bei einer oder mehreren der Kühlarten einen Antrieb umfassen. Der Lüfter kann vorteilhaft bei einer oder mehreren der Kühlarten keinen Antrieb umfassen. So kann je nach gewünschter Kühlart für eine bestimmte Leistungsfähigkeit der elektrischen Maschine ein Lüfter mit oder ohne Antrieb an der Durchtrittsöffnung angeordnet werden.

In einer weiteren vorteilhaften Ausgestaltung einer erfindungsgemäßen elektrischen Maschine ist eine erste Schutzhaube mit der inneren Tragvorrichtung gestoßen. So kann die innere Tragvorrichtung bei einer Kühlart, die eine bestimmte Schutzart erfordert, um einen Schutz der elektrischen Maschine vor Umwelteinflüssen zu erreichen, vorteilhaft einen inneren Kühlmittelstrom von einem äußeren Kühlmittelstrom trennen. Der äußere Kühlmittelstrom wird vorteilhaft durch das Kühlmittel in der Kammer gebildet. Die erste Schutzhaube umgibt einen inneren Bereich in einen Abschnitt zwischen dem ersten Lagerschild und dem Stator, um die Wicklung des Stators und den Rotor vor Umwelteinflüssen zu schützen. So kann ein innerer Kühlmittelstrom durch Kanäle des Stators und Kanälen des Rotors strömen und geschützt vor Umwelteinflüssen für eine Vergleichmäßigung der Temperatur in dem inneren Bereich der elektrischen Maschine sorgen. Der innere Kühlmittelstrom strömt vorteilhaft teilweise an der inneren Tragvorrichtung entlang und kann dort vorteilhaft Wärme aufnehmen und an dem äußeren Kühlmittelstrom, d.h. dem Kühlmittel, in der Kammer vorteilhaft abgeben. Vorteilhaft sind hierfür die Streben der äußeren Tragvorrichtung in radialer Richtung an der inneren Tragvorrichtung als Außenrippe und Innenrippe fortgesetzt.

Hierdurch wird zum einem vorteilhaft eine Wärmeaufnahme der inneren Tragvorrichtung vom innerem Kühlmittelstrom über die Innenrippen und eine vorteilhafte Wärmeabgabe der inneren Tragvorrichtung an das Kühlmittel in der Kammer über die Außenrippen erreicht und zum anderen die mechanische Stabilität vorteilhaft verbessert, so dass die Durchtrittsöffnung der äußeren Tragvorrichtung für in einfacher Weise verbesserte Kühlarten möglichst große Querschnittsöffnungen aufweisen kann und die Kammer auch möglichst groß sein kann.

In einer weiteren vorteilhaften Ausgestaltung einer erfindungsgemäßen elektrischen Maschine ist die Durchtrittsöffnung der Kammer die radiale Öffnung und die axiale Öffnung ist verschlossen. So kann vorteilhaft eine Kühlart in einfacher Weise verbessert realisiert werden, indem das Kühlmittel durch die radiale Öffnung vorteilhaft in die Kammer einströmen kann, sich dort vorteilhaft verteilt ausbreiten kann und die Kammer nicht durch die axiale Öffnung, sondern durch die Durchtrittsöffnung der äußeren Tragvorrichtung verlassen kann, um den ersten Abschnitt der elektrischen Maschine vorteilhaft zu kühlen.

Die axiale Öffnung kann vorteilhaft durch eine axiale Abdeckung, insbesondere gasdicht, verschlossen sein. So kann die axiale Öffnung je nach gewünschter Kühlart verschlossen werden. Das Kühlmittel, das durch die verschlossene axiale Öffnung entweicht ist für die Kühlung des ersten Abschnittes eine vernachlässigbare Menge.

Die axiale Abdeckung kann durch eine lösbare Verbindung an dem ersten Lagerschild befestigt die axiale Öffnung verschließen. So ist es vorteilhaft möglich, zur Inbetriebnahme, Wartung oder Reparatur einer elektrischen Maschine durch die axiale Öffnung einen Zugang zu Komponenten der elektrischen Maschine zur Überwachung, Wartung des Lagers in der Lageraufnahme oder zu Gebern zur Detektion von Messgrößen an einer Welle des Rotors durch eine große Öffnung zu erhalten.

Die axiale Abdeckung kann vorteilhaft an Befestigungsstegen, die die axiale Öffnung umgeben, oder an punktuellen Befestigungsvorrichtungen, die in der axialen Öffnung angeordnet sind, befestigt sein. Vorteilhaft können diese sowohl für die Befestigung der axialen Abdeckung als auch zur Befestigung eines Lüfters für andere Kühlarten verwendet werden.

An Befestigungsstegen, die die radiale Öffnung umgeben, oder punktuellen Befestigungsvorrichtungen, die in der radialen Öffnung angeordnet sind, kann vorteilhaft ein radialer Lüfter befestigt sein, der das Kühlmittel zum Einströmen in die radiale Öffnung fördert.

Vorteilhaft kann das erste Lagerschild an den ersten Abschnitt der elektrischen Maschine in mindestens drei verschiedenen Positionen montiert werden, wobei sich die Positionen durch die Richtung der Orientierung der radialen Öffnung unterscheiden. So kann die elektrische Maschine vorteilhaft platzsparend dem zur Verfügung stehenden Aufstellort angepasst werden, da durch die Orientierung der radialen Öffnung der Montageort des radialen Lüfters gewählt werden kann.

In einer weiteren vorteilhaften Ausgestaltung einer erfindungsgemäßen elektrischen Maschine ist die Durchtrittsöffnung der Kammer die axiale Öffnung und die radiale Öffnung ist verschlossen. So kann vorteilhaft eine Kühlart in einfacher Weise verbessert realisiert werden, indem das Kühlmittel durch die axiale Öffnung vorteilhaft in die Kammer einströmen kann, sich dort vorteilhaft verteilt ausbreiten kann und die Kammer nicht durch die radiale Öffnung, sondern durch die Durchtrittsöffnung der äußeren Tragvorrichtung verlassen kann, um den ersten Abschnitt der elektrischen Maschine vorteilhaft zu kühlen.

Die radiale Öffnung kann vorteilhaft durch eine radiale Abdeckung, insbesondere gasdicht, verschlossen sein. So kann die radiale Öffnung je nach gewünschter Kühlart verschlossen werden. Das Kühlmittel, das durch die verschlossene radiale Öffnung entweicht, ist für die Kühlung des ersten Abschnittes eine vernachlässigbare Menge.

Die radiale Abdeckung kann durch eine lösbare Verbindung an dem ersten Lagerschild befestigt die radiale Öffnung verschließen. So ist es vorteilhaft möglich, zur Inbetriebnahme, Wartung oder Reparatur einer elektrischen Maschine durch die radiale Öffnung einen Zugang zu Komponenten der elektrischen Maschine zur Überwachung und/oder Wartung des Lagers in der Lageraufnahme oder zu Gebern, zur Detektion von Messgrößen an einer Welle des Rotors durch eine große Öffnung zu erhalten. Vorteilhaft kann das erste Lagerschild an den ersten Abschnitt der elektrischen Maschine in mindestens drei verschiedenen Positionen montiert werden, wobei sich die Positionen durch die Richtung der Orientierung der radialen Öffnung unterscheiden. Es kann so die Orientierung der radialen Öffnung für einen Aufstellort so gewählt werden, dass der Zugang zu den Komponenten der elektrischen Maschine zur Überwachung und/oder Wartung des Lagers in der Lageraufnahme oder zu den Gebern, insbesondere für eine Person, am Aufstellort platzsparend möglich ist. So kann die elektrische Maschine vorteilhaft platzsparend dem zur Verfügung stehenden Aufstellort angepasst werden.

Die radiale Abdeckung kann vorteilhaft an Befestigungsstegen, die die radiale Öffnung umgeben, oder an punktuellen Befestigungsvorrichtungen, die in der radialen Öffnung angeordnet sind, befestigt sein. Vorteilhaft können diese sowohl für die Befestigung der radialen Abdeckung als auch zur Befestigung eines Lüfters für andere Kühlarten verwendet werden.

An Befestigungsstegen, die die axiale Öffnung umgeben, oder an punktuellen Befestigungsvorrichtungen, die in der axialen Öffnung angeordnet sind, kann vorteilhaft ein axialer Lüfter befestigt sein, der das Kühlmittel zum Einströmen in die axiale Öffnung fördert.

In einer weiteren vorteilhaften Ausgestaltung einer erfindungsgemäßen elektrischen Maschine ist an der Durchtrittsöffnung der Kammer ein Modul zur Kühlung des ersten Abschnitts durch einen Wärmetauscher angeordnet und die axiale Öffnung ist verschlossen. So kann vorteilhaft eine Kühlart mit einem geschlossen Kühlkreislaufes mit dem Kühlmittel in einfacher Weise verbessert realisiert werden, indem das Kühlmittel durch die Durchtrittsöffnung der Kammer vorteilhaft in die Kammer einströmen kann und die Kammer durch die Durchtrittsöffnungen der äußeren Tragvorrichtung verlassen kann, um den ersten Abschnitt der elektrischen Maschine vorteilhaft zu kühlen. Den ersten Abschnitt der elektrischen Maschine verlässt das Kühlmittel über eine weitere Öffnung des ersten Abschnitts der elektrischen Maschine, die in derselben Richtung orientiert ist wie die Durchtrittsöffnung des ersten Lagerschildes. Durch die weitere Öffnung gelangt das im ersten Abschnitt erwärmte Kühlmittel in ein Modul, indem das Kühlmittel durch einen Wärmetauscher abgekühlt wird und wieder vorteilhaft durch die Durchtrittsöffnung der Kammer in die Kammer einströmt. Der Wärmetauscher ermöglicht die Kühlung der elektrischen Maschine vorteilhaft mit einem Schutz des Innenraums der elektrischen Maschine vor Umwelteinflüssen gemäß einer entsprechenden Schutzklasse. Der Wärmetauscher kann vorteilhaft in einer Kühlart mit einem gasförmigen Kühlmittel und in einer weiteren Kühlart mit einem flüssigen Kühlmittel betrieben werden.

Das Modul kann vorteilhaft an der Durchtrittsöffnung der Kammer angeordnet einen Lüfter aufweisen, der das Kühlmittel durch eine Öffnung eines Gehäuseteils des Moduls, das den Wärmetauscher umschließt, ansaugt und in die Durchtrittsöffnung der Kammer befördert.

Die Durchtrittsöffnung der Kammer kann vorteilhaft die radiale Öffnung des ersten Lagerschildes sein, da dann an Befestigungsstegen, die die radiale Öffnung und die weitere Öffnung umgeben, oder an punktuellen Befestigungsvorrichtungen, die in der radialen Öffnung angeordnet sind, das Modul vorteilhaft befestigt sein kann. Das Modul kann so vorteilhaft platzsparend auf einer Außenfläche der elektrischen Maschine, die der Orientierung der radialen Öffnung des ersten Lagerschildes und der weiteren Öffnung des ersten Abschnitts entspricht, befestigt sein.

Die axiale Öffnung kann vorteilhaft durch eine axiale Abdeckung, insbesondere gasdicht, verschlossen sein. So kann die axiale Öffnung je nach gewünschter Kühlart verschlossen werden. Das Kühlmittel, das durch die verschlossene axiale Öffnung entweicht ist für die Kühlung des ersten Abschnittes eine vernachlässigbare Menge.

Die axiale Abdeckung kann durch eine lösbare Verbindung am ersten Lagerschild befestigt die axiale Öffnung verschließen. So ist es vorteilhaft möglich, zur Inbetriebnahme, Wartung oder Reparatur einer elektrischen Maschine durch die axiale Öffnung einen Zugang zu Komponenten der elektrischen Maschine zur Überwachung und/oder Wartung des Lagers in der Lageraufnahme oder zu Gebern zur Detektion von Messgrößen an einer Welle des Rotors eine große Öffnung zu erhalten.

Die axiale Abdeckung kann vorteilhaft an Befestigungsstegen, die die axiale Öffnung umgeben, oder an punktuellen Befestigungsvorrichtungen, die in der axialen Öffnung angeordnet sind, befestigt sein. Vorteilhaft können diese sowohl für die Befestigung der axialen Abdeckung als auch zur Befestigung eines Lüfters für andere Kühlarten verwendet werden.

Vorteilhafte Ausgestaltungen erfindungsgemäßer elektrischer Maschinen, eines Lagerschild, das das erste Lagerschild ist, sowie einer Serie von elektrischen Maschinen ergeben sich vorteilhaft durch Kombination einiger oder mehrerer beschriebener Merkmale.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein erstes Ausführungsbeispiel einer elektrischen Maschine, bei der ein radialer Lüfter an einer radialen Öffnung angeordnet ist.
- FIG 2: eine Ansicht einer Oberseite eines Ausführungsbeispiel eines ersten Lagerschildes,
- FIG 3: eine Ansicht einer Rückseite eines Ausführungsbeispiel eines ersten Lagerschildes,
- FIG 4: eine Ansicht einer Vorderseite eines Ausführungsbeispiel eines ersten Lagerschildes,
- FIG 5: ein zweites Ausführungsbeispiel einer elektrischen Maschine, bei der ein axialer Lüfter an einer axialen Öffnung angeordnet ist.
- FIG 6: ein drittes Ausführungsbeispiel einer elektrischen Maschine, bei der ein Modul zur Kühlung durch einen Wärmetauscher vorhanden ist.
- FIG 7: ein viertes Ausführungsbeispiel einer elektrischen Maschine mit einer ersten Schutzhaube.

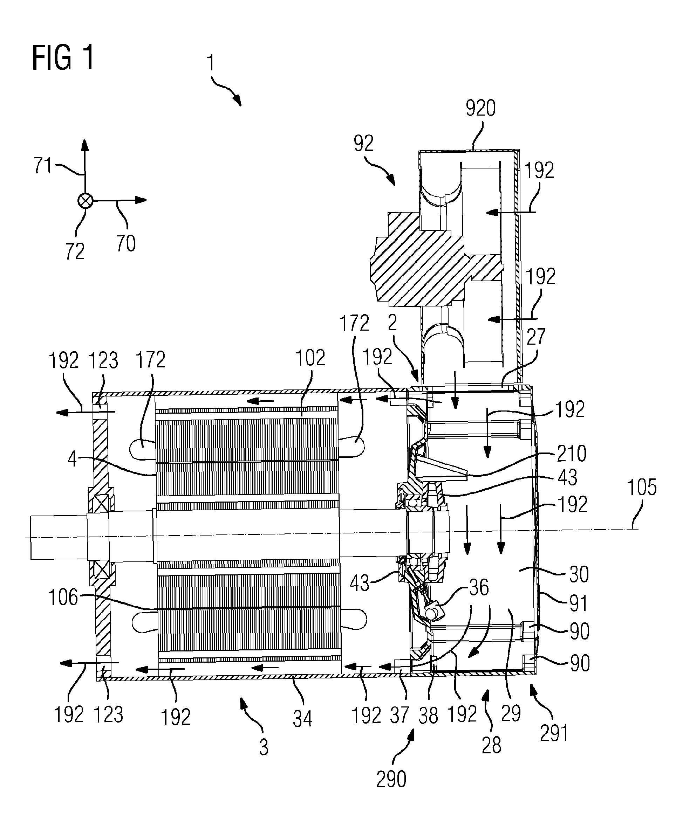

FIG 1 zeigt ein erstes Ausführungsbeispiel einer elektrischen Maschine 1, bei der ein radialer Lüfter 92 an einer radialen Öffnung 27 angeordnet ist. Die elektrische Maschine 1 umfasst ein erstes Lagerschild 2, einen ersten Abschnitt 3 und einen Rotor 4. Das erste Lagerschild 2 weist eine innere Tragvorrichtung 21, eine Lageraufnahme 22, die in radialen Richtungen 71,72 durch die innere Tragvorrichtung 21 begrenzt ist, einen Anbauflansch 28, der eine Kammer 29 umfasst, und eine äußere Tragvorrichtung 23,24 auf, die sich an die innere Tragvorrichtung 21 in radialen Richtungen 70, 71 anschließt, und Durchtrittsöffnungen 25,26 an der Kammer 29 zur Kühlung des ersten Abschnitts 3 aufweist. Die Kammer 29 weist die radiale Öffnung 27 und eine axiale Öffnung 30 auf.

In dem ersten Ausführungsbeispiel ist der Rotor 4 in dem ersten Abschnitt 3 und in dem ersten Lagerschild 2 drehbar mit Hilfe von Lagern, die Wälzlager sind, gelagert und erstreckt sich in einer axialen Richtung 70 entlang einer Drehachse 105. Der Rotor 4 weist ein Blechpaket auf, das auf einer Welle befestigt ist, die mit Hilfe der Lager drehbar in dem ersten Abschnitt 3 und dem ersten Lagerschild 2 gelagert ist. Der erste Abschnitt 3 weist eine äußere Berandung 34 auf, die in radialen Richtungen 71,72 im Wesentlichen das Gehäuse des ersten Abschnittes 3 bildet. Die äußere Berandung 34 ist zwischen dem ersten Lagerschild 2 und einem weiteren Lagerschild angeordnet, das sich an dem ersten Abschnitt 3 befindet. Der Rotor ist in dem ersten Abschnitt 3 durch ein Wälzlager in dem weiteren Lagerschild gelagert. Wälzkörper des Wälzlagers in dem weiteren Lagerschild sind in der FIG 1 nicht konkretisiert, sollen aber, wie ein Wälzlager in der Lageraufnahme 22, Kugeln sein, so dass in den Ausführungsbeispielen der FIG 1 bis 7 die Lagerung des Rotors 4 in dem ersten Lagerschild 2 und dem weiteren Lagerschild durch Kugellager erfolgt. Die Lageraufnahme 22 ist in der axialen Richtung 70 zwischen dem ersten Abschnitt 3 und der Kammer 29 angeordnet. Das Lager ist durch Lagerdeckel 43, die an der inneren Tragvorrichtung 21 befestigt sind, in der Lageraufnahme 26 gehalten. Zur Überwachung des Lagers ist in einer Haltevorrichtung 31, die die innere Tragvorrichtung 21 aufweist, ein Lagerthermometer 36 befestigt. Die innere Tragvorrichtung weist auch eine Drehmomentenstütze 210 auf. Das erste Lagerschild ist durch Befestigungselemente 38 an dem ersten Abschnitt 3 befestigt. Hierzu wirken die Befestigungselemente 38 mit den Befestigungsvorrichtungen 37 des ersten Abschnitts 3 und den Befestigungsvorrichtungen 35 zusammen.

Die axiale Öffnung 30 befindet sich an einem zweiten axialen Ende 291 der Kammer 29, wobei sich die Kammer 29 in der axialen Richtung von einem ersten axialen Ende 290 zu dem zweiten axialen Ende 291 erstreckt und die Kammer 29 das erste axiale Ende 290 an der äußeren Tragvorrichtung 23, 24 aufweist. Die radiale Öffnung 27 befindet sich an dem Anbauflansch 28 zwischen dem ersten axialen Ende 290 und dem zweiten axialen Ende 291.

Bei der elektrische Maschine 1 gemäß dem ersten Ausführungsbeispiel wird ein gasförmiges Kühlmittel als Kühlmittel zur Kühlung des ersten Abschnitts 3 verwendet. Das gasförmige Kühlmittel ist Luft. Der erste Abschnitt 3 der elektrischen Maschine 1 weist neben einer Öffnung für das erste Lagerschild weitere Öffnung 123 zur Kühlung auf.

An Befestigungsstegen, die die radiale Öffnung 27 umgeben, ist ein radialer Lüfter 92 befestigt, der das Kühlmittel zum Einströmen in die radiale Öffnung 27 gemäß den Pfeilen 192 fördert. Der radiale Lüfter 92 umfasst ein Gehäuse 920, an dem alle Komponenten des radialen Lüfters 92 befestigt sind und das an den Befestigungsstegen, die die radiale Öffnung 27 umgeben, befestigt ist. Der radiale Lüfter 92 umfasst bei einer als zweite Kühlart bezeichneten Kühlart gemäß der FIG 1 einen Antrieb. Die axiale Abdeckung 91 verschließt die axiale Öffnung 30. Die axiale Abdeckung 91 ist an dem ersten Lagerschild 2 durch lösbare Verbindungen befestigt, die die punktuellen Befestigungsvorrichtungen 90 umfassen, die in der axialen Öffnung 30 angeordnet sind. Die punktuellen Befestigungsvorrichtungen 90 können auch zur Befestigung eines Lüfters für andere Kühlarten verwendet werden.

In der zweiten Kühlart strömt das Kühlmittel gemäß den Pfeilen 192 in einer als zweite Reihenfolge bezeichneten Reihenfolge von der radialen Öffnung 27, die in der zweiten Kühlart eine Durchtrittsöffnung der Kammer 29 ist, direkt in die Kammer 29 und verlässt die Kammer 29 direkt durch die Durchtrittsöffnungen 25, 26 der äußeren Tragvorrichtung 23, 24, um den ersten Abschnitt 3 der elektrischen Maschine 1 zu kühlen. Im ersten Abschnitt 3 strömt das Kühlmittel entsprechend den Pfeilen 192 zumindest an äußeren Kanälen am Stator 102 entlang, um den Stator 102 zu kühlen. Das erwärmte Kühlmittel verlässt die elektrische Maschine 1 durch die weiteren Öffnungen 123.

Bei einem Betrieb der elektrischen Maschine 1 als Motor wird über eine Wicklung, die Wicklungsköpfe 172 aufweist elektrische Energie zugeführt und durch das magnetische Zusammenwirken zwischen einem Stator 102 und Rotor 4 elektrische Energie in mechanische Energie umgewandelt. Dabei wird der Rotor 4 in Drehung versetzt und es kann an der Welle mechanische Energie an einen mechanischen Verbraucher in Form einer Drehbewegung abgegeben werden. Die Wicklung ist in Nuten eines Blechpakets des Stators 102 befestigt. Das Blechpaket umfasst in der axialen Richtung 70 geschichtete Bleche. Die äußern Kanäle, in denen das Kühlmittel entsprechend den Pfeilen 192 entlang strömt, sind Ausnehmungen in den geschichteten Blechen am äußeren Umfang.

In dem ersten Ausführungsbeispiel ist die elektrische Maschine eine Asynchronmaschine, so dass der Rotor eine Kurzschlusswicklung als eine entsprechende Einrichtung aufweist, die über den Luftspalt 106 mit dem Stator magnetisch zusammenwirkt.

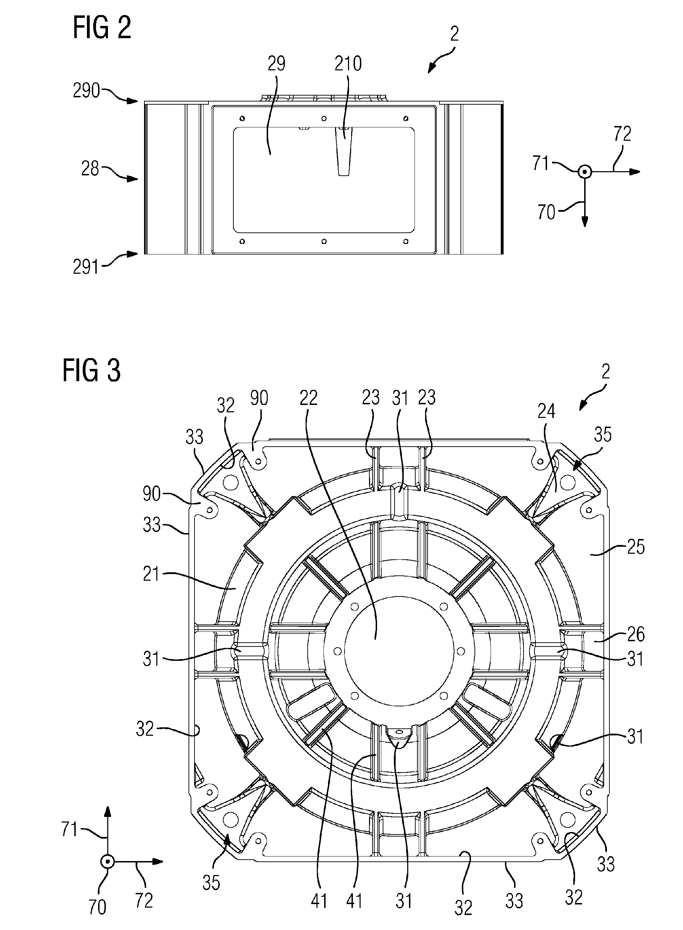

Die FIG 2 zeigt eine Ansicht einer Oberseite eines Ausführungsbeispiels eines ersten Lagerschildes 2. Die Ansicht der Oberseite zeigt eine Projektion der radialen Öffnung, deren Ränder bei der Projektion für die Ansicht der Oberseite in einer zu einer radialen Richtung 71 entgegengerichteten Richtung auf einer Ebene mit Normalenvektor in radialer Richtung 71 eine maximale Fläche umschließt. Die axiale Öffnung 30 erstreckt sich bis auf verbleibende Befestigungsstege über eine axiale Fläche des ersten Lagerschildes 2. Durch die radiale Öffnung 27 ist die Drehmomentenstütze 210 in der Kammer 29 zu sehen.

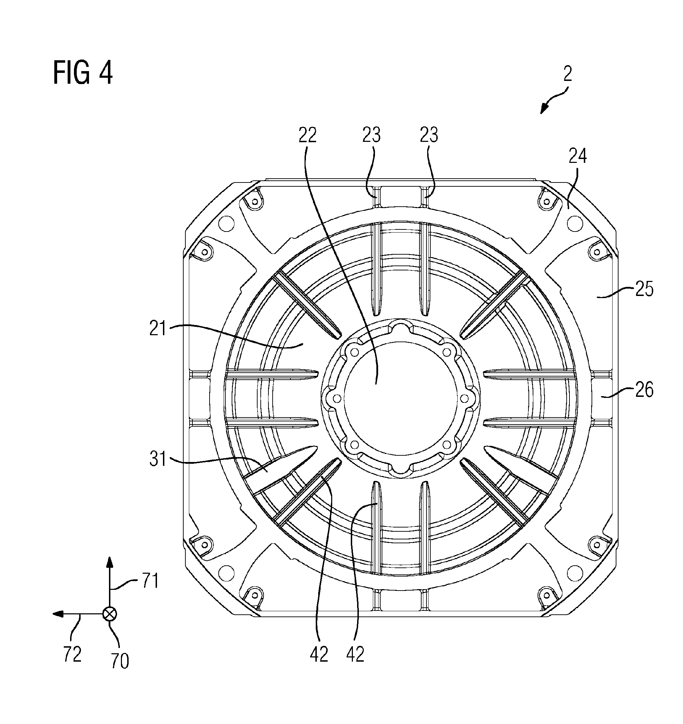

Die FIG 3 zeigt eine Ansicht einer Rückseite eines Ausführungsbeispiels eines ersten Lagerschildes 2. Innenseiten 32 von Außenwänden 33 des ersten Lagerschilds 2 begrenzen die Kammer 29 in den radialen Richtungen 71,72. Die Außenwände 33 weisen an der Kammer 29 eine annähernd gleiche Dicke auf. Die Außenwände 33 des ersten Lagerschilds 2 fluchten mit einer äußeren Berandung 34 des ersten Abschnitts 3. In der FIG 1 ist dies in einem Längsschnitt nur an den Flächen mit einem Normalenvektor parallel zur radialen Richtung 71 zu erkennen. In dem Ausführungsbeispiel fluchten aber dennoch alle Außenwände 33 des ersten Lagerschilds 2 mit einer äußeren Berandung 34 des ersten Abschnitts 3. Hierzu sind z.B. in der FIG 2 entsprechende Zentrierungen als Hilfsmittel für eine kühlmitteldichtere Verbindung zwischen dem ersten Lagerschild 2 und der äußeren Berandung 34 an dem ersten axialen Ende 290 im Bereich des linken oberen Bereichs der FIG 3 und dem rechten oberen Bereich der FIG 3. In FIG 4 sind die Zentriermittel an vier gerundeten Ecken des ersten Lagerschilds 2 zu sehen.

Das erste Lagerschild 2 weist einen axialen Umriss mit einer Grundform auf, die eckig ist. Der axiale Umriss entsteht durch Projektion des ersten Lagerschildes 2 in der axialen Richtung 70 auf einer axialen Ebene, deren Normalenvektor parallel zu der axialen Richtung 70 ist.

Die Durchtrittsöffnungen 25,26 der äußeren Tragvorrichtung 23,24 und die Kammer 29 erstrecken sich symmetrisch zur Drehachse 105 in Bereichen, die von der Drehachse 105 in radialen Richtungen 71,72 weiter entfernt sind als der Luftspalt 106.

Die äußere Tragvorrichtung 23,24 ist durch Streben gebildet, die die Durchtrittsöffnungen 25,26 der äußeren Tragvorrichtung 23,24 voneinander trennen. Die Streben verlaufen hierfür in radialen Richtungen 71,72. Die Streben sind an Seiten des axialen Umrisses als mehrere dünne Streben 23 ausgebildet. Dünn heißt bei den mehreren dünnen Streben 23, dass eine Durchtrittsöffnung 26 der äußeren Tragvorrichtung 23,24 zwischen zwei der mehreren dünnen Streben 23 in der tangentialen Richtung eine größere Erstreckung als die Dicke der mehreren dünnen Streben 23 aufweist. Die äußere Tragvorrichtung 23, 24 weist die mehreren dünnen Streben 23 an ersten Stellen auf, an denen die Außenwände 33 in radialer Richtung 71, 72 näher an der Drehachse 105 sind als an anderen Stellen. Die Streben in den Ecken der Grundform verjüngen sich in radialen Richtungen 71,72 zur Lageraufnahme 22 hin. Die sich verjüngenden Streben 24 weisen die Befestigungsvorrichtungen 35 auf und trennen benachbarte Durchtrittsöffnungen 25 der äußeren Tragvorrichtung 23,24. Unter anderem haben die durch die verjüngende Streben 24 getrennten Durchtrittsöffnungen 25 in radialen Richtungen 71,72 zur Lageaufnahme 22 hin größere Öffnungsquerschnitte als wenn die Strebe sich nicht verjüngen würde. Die Befestigungsvorrichtungen 35 befinden sich bei den sich verjüngenden Streben in einem in radialer Richtung 71,72 außen gelegen Bereich der Strebe 24.

Bei dem ersten Lagerschild 2 sind die innere Tragvorrichtung 21, die Lageraufnahme 22, der Anbauflansch 28 und die Kammer 29 stoffschlüssig verbunden. Mit dem ersten Lagerschild 2, insbesondere mit der inneren Tragvorrichtung 21, sind Haltevorrichtungen für Überwachung, z.B. für das Lagerthermometer 36, oder/und Wartung eines Lagers oder/und eine Drehmomentstütze 210 stoffschlüssig verbunden. Die Drehmomentstütze 210 dient zur Befestigung eines Gebers zur Detektion von Messgrößen an einer Welle des Rotors 4.

Das erste Lagerschild 2 ist ein Gussteil, das stoffschlüssig durch ein Gießverfahren aus einem flüssigen Werkstoff hergestellt. Das erste Lagerschild 2 kann durch die erfindungsgemäße Ausgestaltung des Ausführungsbeispiels des ersten Lagerschildes 2 mit einem Gießverfahren in einfacher Weise für verschiedene Kühlungsarten kostengünstig verbessert hergestellt werden. Das Gussteil ist ein Grauguss. Unter anderem weist das erste Lagerschild 2 nach dem Gießen eine gute Entformbarkeit auf, so dass das erste Lagerschild 2 nach dem Gießen gut aus der Form herausgelöst werden kann. In dem Ausführungsbeispiel des ersten Lagerschilds 2 sind die punktuellen Befestigungsvorrichtungen 90 stoffschlüssig mit dem ersten Lagerschild 2, insbesondere mit dem Anbauflansch 28, verbunden. Das Gussteil umfasst somit auch vorteilhaft die punktuellen Befestigungsvorrichtungen 90. Des Weiteren sind die Streben 23,24 der äußeren Tragvorrichtung 23,24 in radialen Richtungen 71, 72 an der inneren Tragvorrichtung 21 als Außenrippe 41 und Innenrippe 42. Das Gussteil umfasst somit auch die Außenrippen 41 und die Innenrippen 42. Die Innenrippen 42 sind in der FIG 4 zu sehen, die eine Ansicht einer Vorderseite des Ausführungsbeispiels des ersten Lagerschildes 2 zeigt.

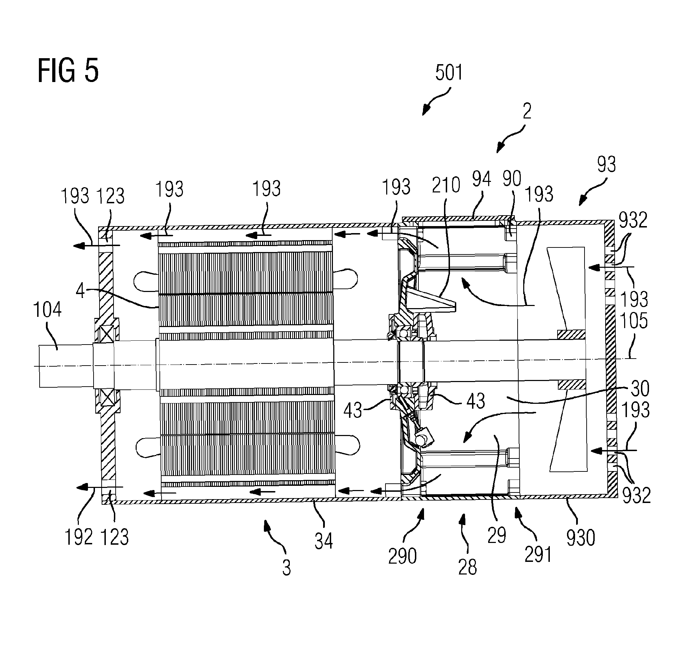

Die FIG 5 zeigt ein zweites Ausführungsbeispiel einer elektrischen Maschine 501, bei der ein axialer Lüfter 93 an einer axialen Öffnung 30 angeordnet ist.

Bei der elektrischen Maschine 501 gemäß dem zweiten Ausführungsbeispiel wird ein gasförmiges Kühlmittel als Kühlmittel zur Kühlung eines ersten Abschnitts 3 der elektrischen Maschine 501 verwendet. Das gasförmige Kühlmittel ist Luft. Der erste Abschnitt 3 der elektrischen Maschine 501 weist neben der Öffnung für das erste Lagerschild die weitere Öffnung 123 zur Kühlung auf.

An den punktuellen Befestigungsvorrichtungen 90 ist ein axialer Lüfter 93 befestigt, der das Kühlmittel zum Einströmen in die axiale Öffnung 30 gemäß den Pfeilen 193 fördert. In der FIG 5 sind beispielhaft für Lüfter 92, 93, 95, 96 Öffnungen 932 der Lüfter 92, 93, 95, 96 für ein Einströmen des Kühlmittels in die Lüfter 92, 93, 95, 96 eingezeichnet. Der axiale Lüfter 93 umfasst ein Gehäuse 930, an dem alle Komponenten des axialen Lüfters 93 befestigt sind und das an den punktuellen Befestigungsvorrichtungen 90 befestigt ist. Der axiale Lüfter 93 weist bei einer als erste Kühlart bezeichneten Kühlart gemäß der FIG 1 keinen Antrieb auf. Der axiale Lüfter 93 ist mit einer Welle 104, auf der der Rotor 4 befestigt ist, verbunden. Die elektrische Maschine 501 dient somit in einem Betrieb der elektrischen Maschine 501 auch als Antrieb des axialen Lüfters 93. Im Betrieb der elektrischen Maschine dreht sich die Welle 104 durch das magnetische Zusammenwirken zwischen Stator 102 und Rotor 4. Die radiale Abdeckung 94 verschließt die radiale Öffnung 27. Die radiale Abdeckung 94 ist an dem ersten Lagerschild 2 durch lösbare Verbindungen befestigt, die Befestigungsstege umfasst, die die radiale Öffnung 27 umgeben. Die Befestigungsstege können auch zur Befestigung des radialen Lüfters 92 der zweiten Kühlart verwendet werden.

In der ersten Kühlart strömt das Kühlmittel gemäß den Pfeilen 193 in einer als ersten Reihenfolge bezeichnete Reihenfolge von der axialen Öffnung 30, die in der ersten Kühlart eine Durchtrittsöffnung der Kammer 29 ist, direkt in die Kammer 29 und verlässt die Kammer 29 direkt durch die Durchtrittsöffnungen 25,26 der äußeren Tragvorrichtung 23,24 um den ersten Abschnitt 3 der elektrischen Maschine 1 zu kühlen. Im ersten Abschnitt 3 strömt das Kühlmittel entsprechend den Pfeilen 192 zumindest an äußeren Kanälen am Stator 102 entlang, um den Stator 102 zu kühlen. Das erwärmte Kühlmittel verlässt die elektrische Maschine 501 durch die weiteren Öffnungen 123.

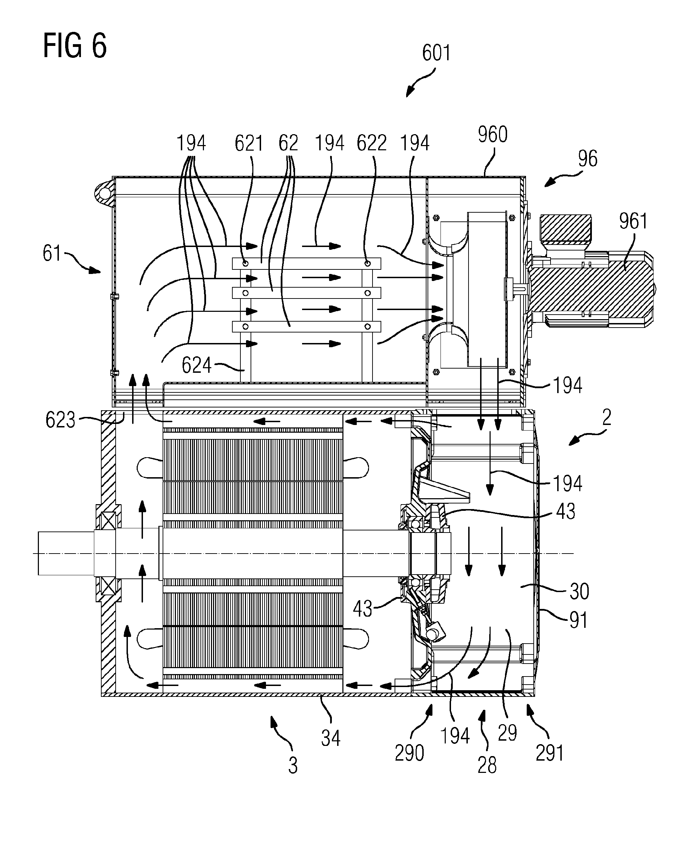

Die FIG 6 zeigt ein drittes Ausführungsbeispiel einer elektrischen Maschine 601, bei der ein Modul 61 zur Kühlung durch einen Wärmetauscher 62 vorhanden ist.

An der elektrischen Maschine 601 ist an einer Durchtrittsöffnung, die die radiale Öffnung 27 ist, das Modul 61 zur Kühlung eines ersten Abschnitts 3 der elektrischen Maschine 601 durch einen Wärmetauscher 62 angeordnet und die axiale Öffnung 30 durch die axiale Abdeckung 91 mit der lösbare Verbindung verschlossen ist. So wird eine Kühlart mit einem geschlossen Kühlkreislaufes mit dem ersten Lagerschild 2 realisiert, indem das Kühlmittel gemäß den Pfeilen 194 durch die radiale Öffnung 27 vorteilhaft in die Kammer 29 einströmen kann, sich dort vorteilhaft verteilt ausbreiten kann und die Kammer 29 nicht durch die axiale Öffnung 30, sondern durch die Durchtrittsöffnungen 25,26 der äußeren Tragvorrichtung 23,24 verlassen kann, um den ersten Abschnitt 3 der elektrischen Maschine 601 zu kühlen. Den ersten Abschnitt 3 der elektrischen Maschine 601 verlässt das Kühlmittel über eine weitere Öffnung 623 des ersten Abschnittes 3 der elektrischen Maschine 601, die in derselben Richtung orientiert ist wie die radiale Öffnung 27 des ersten Lagerschildes 2. Durch die weitere Öffnung 623 gelangt das im ersten Abschnitt 3 erwärmte Kühlmittel in ein Modul 61 in dem das Kühlmittel durch einen Wärmetauscher 62 abgekühlt wird und wieder vorteilhaft durch die radiale Öffnung 27 in die Kammer 29 einströmt. Der Wärmetauscher 62 besteht aus mehreren Wärmetauscherelementen die in einem Traggestell 624 parallel zu der axialen Richtung befestigt sind. Das Kühlmittel kann so über die Wärmetauscherelemente strömen und die Wärme an einem flüssigen Kühlmittel im Wärmetauscher abgeben. Der Wärmetauscher 62 weist einen ersten Anschluss 621 auf, über den das flüssige Kühlmittel in den Wärmetauscher 62 einströmt, und weist einen zweiten Anschluss 622 auf, über den das flüssige Kühlmittel den Wärmetauscher 62 verlässt.

Das Modul 61 weist an der radialen Öffnung 27 angeordnet einen radialen Lüfter 96 auf, der das Kühlmittel durch eine Öffnung eines Gehäuseteils des Moduls 61, das den Wärmetauscher 62 umschließt, ansaugt und in die radiale Öffnung 27 fördert. Der radiale Lüfter 96 weist einen eigenen Antrieb 961 auf.

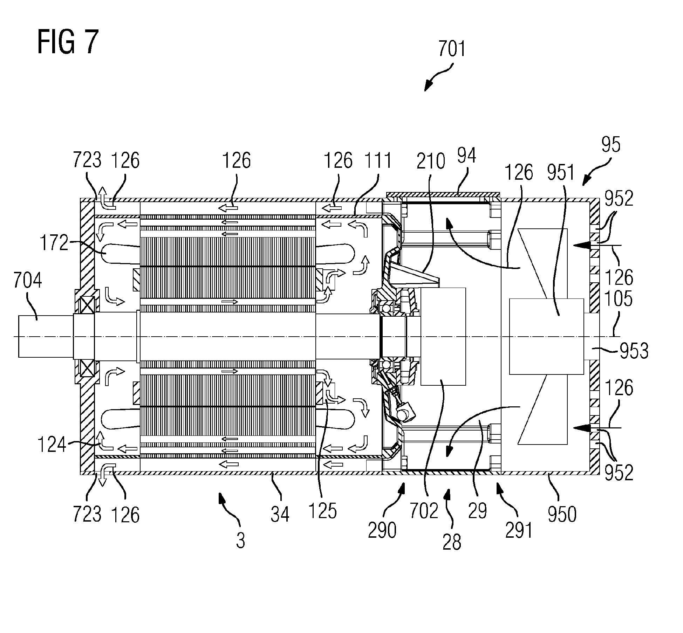

Die FIG 7 zeigt ein viertes Ausführungsbeispiel einer elektrischen Maschine 701 mit einer ersten Schutzhaube 111. Bei der elektrischen Maschine 701 ist eine erste Schutzhaube 111 mit der inneren Tragvorrichtung 21 gestoßen. Die innere Tragvorrichtung 21 kann so einen durch Pfeile repräsentierten inneren Kühlmittelstrom 124 von einem einen durch Pfeile repräsentierten äußeren Kühlmittelstrom trennen. Der äußere Kühlmittelstrom 126 wird durch das Kühlmittel in der Kammer gebildet. Die erste Schutzhaube 111 umgibt einen inneren Bereich in einen Abschnitt zwischen dem ersten Lagerschild 2 und dem Stator 102, um die Wicklung des Stators 102 mit den Wicklungsköpfen 172 und den Rotor 4 vor Umwelteinflüssen zu schützen. So kann ein innerer Kühlmittelstrom 124 durch Kanäle des Stators und Kanälen des Rotors strömen und geschützt vor Umwelteinflüssen für eine Vergleichmäßigung der Temperatur in dem inneren Bereich der elektrischen Maschine sorgen. Zur Umlenkung des inneren Kühlmittelstroms 124 sind am Rotor 4 Umlenkeinrichtungen 125 vorhanden. Der innere Kühlmittelstrom 124 strömt teilweise an der inneren Tragvorrichtung 21 entlang und kann dort Wärme aufnehmen und an dem äußeren Kühlmittelstrom 126 in der Kammer 29 abgeben. Eine Wärmeaufnahme der inneren Tragvorrichtung 21 vom innerem Kühlmittelstrom 124 über die Innenrippen 42 und eine vorteilhafte Wärmeabgabe der inneren Tragvorrichtung 21 an das Kühlmittel in der Kammer 29, welches den äußeren Kühlmittelstrom 126 bildet, über die Außenrippen 41 wird erreicht.

Der erste Abschnitt 3 weist eine äußere Berandung 34 auf, die in radialen Richtungen 71,72 im Wesentlichen das Gehäuse des ersten Abschnittes 3 bildet. Die äußere Berandung 34 ist zwischen dem ersten Lagerschild 2 und einem weiteren Lagerschild angeordnet, das sich an dem ersten Abschnitt 3 befindet. Eine zweite Schutzhaube umgibt analog zu der ersten Schutzhaube 111 einen inneren Bereich in einen Abschnitt zwischen dem weiteren Lagerschild und dem Stator 102, um die Wicklung des Stators 102 mit den Wicklungsköpfen 172 und den Rotor 4 vor Umwelteinflüssen zu schützen.

Das Kühlmittel wird als äußerer Kühlmittelstrom 126 über einen axialen Lüfter 95 in die axiale Öffnung 30 gefördert. Der axiale Lüfter 95 weist Öffnungen 952 an seinem Gehäuse 950 für ein Einströmen des äußeren Kühlmittels 126 auf. Der axiale Lüfter weist einen eigenen Antrieb 951 auf, der einen Außenläufermotor umfasst. Der Antrieb ist über eine feststehende Achse 953 am Gehäuse des Lüfters 950 befestigt. An den punktuellen Befestigungsvorrichtungen 90 ist der axiale Lüfter 95 über das Gehäuse 950 befestigt. der das Kühlmittel zum Einströmen in die axiale Öffnung 30 gemäß den Pfeilen 193 fördert. In der FIG 5 sind beispielhaft für Lüfter 92, 93, 95, 96 Öffnungen 932 der Lüfter 92, 93, 95, 96 für ein Einströmen des Kühlmittels in die Lüfter 92, 93, 95, 96 eingezeichnet. Der axiale Lüfter 93 umfasst ein Gehäuse 930, an dem alle Komponenten des axialen Lüfters 93 befestigt sind und das an den punktuellen Befestigungsvorrichtungen 90 befestigt ist.

In der Kammer 29 ist ein Geber 702 zur Detektion von Messgrößen an einer Welle 704, auf der das Blechpaket des Rotors 4 befestigt ist, an der Drehmomentenstütze 210 befestigt. Der Gebers 702 nimmt in radialen Richtungen 71, 72 einen geringeren Raum als die innere Tragvorrichtung 21. So stört der Geber 702 nicht die in vorteilhafter einfacher Weise verbessert realisierbaren verschiedenen Kühlarten.

Ein erstes Ausführungsbeispiel einer erfindungsgemäßen Serie von elektrischen Maschinen umfasst eine erste elektrische Maschine 501 gemäß FIG 5 und eine zweite elektrische Maschine 1 gemäß FIG 1.

Ein zweites Ausführungsbeispiel einer erfindungsgemäßen Serie von elektrischen Maschinen umfasst eine erste elektrische Maschine 701 gemäß FIG 7 und die zweite elektrische Maschine 1 gemäß FIG 1.

Ein drittes Ausführungsbeispiel einer erfindungsgemäßen Serie von elektrischen Maschinen umfasst eine erste elektrische Maschine 501 gemäß FIG 5 und eine zweite elektrische Maschine 601 gemäß FIG 6.

Ein drittes Ausführungsbeispiel einer erfindungsgemäßen Serie von elektrischen Maschinen umfasst eine erste elektrische Maschine 501 gemäß FIG 5, eine zweite elektrische Maschine 701 gemäß FIG 7, eine dritte elektrische Maschine 1 gemäß FIG 1 und eine vierte elektrische Maschine 601 gemäß FIG 6.

Obwohl die Erfindung im Detail durch die bevorzugten Ausführungsbeispiele näher bestimmt wurde, ist sie nicht auf die offenbarten Beispiele beschränkt. Andere Variationen können vom Fachmann hieraus abgeleitet werden, ohne den Schutzumfang der Erfindung zu verlassen. So wäre es auch z.B. denkbar, dass das Kühlmittel, der innere Kühlmittelstrom, der äußere Kühlmittelstrom in einer zu den beschriebenen Strömungsrichtungen entgegengesetzten Richtung strömt, auch wenn nicht alle Vorteile der Erfindung erreicht werden.

## Patentansprüche

1. Elektrische Maschine (1,501,601,701) die ein erstes Lagerschild (2), einen ersten Abschnitt (3) und einen Rotor (4) umfasst, wobei der Rotor (4)in dem ersten Abschnitt (3) und in dem ersten Lagerschild (2) drehbar gelagert ist und sich in einer axialen Richtung (70) entlang einer Drehachse (105) erstreckt, wobei das erste Lagerschild (2)
- eine innere Tragvorrichtung (21),
- eine Lageraufnahme (22) aufweist, die in radialen Richtungen (71,72) durch die innere Tragvorrichtung (21) begrenzt ist,
**dadurch gekennzeichnet, dass** das erste Lagerschild (2)
- einen Anbauflansch (28), der eine Kammer (29) umfasst, und
- eine äußere Tragvorrichtung (23,24) aufweist, die sich an die innere Tragvorrichtung (21) in radialen Richtungen (71,72) anschließt, und Durchtrittsöffnungen (25,26) an der Kammer (29) zur Kühlung des ersten Abschnitts (3) aufweist, wobei die Kammer (29) eine radiale (27) und eine axiale Öffnung (30) aufweist.

2. Elektrische Maschine (1,501,601,701) nach Anspruch 1, wobei die Lageraufnahme (22) in der axialen Richtung (70) zwischen dem ersten Abschnitt (3) und der Kammer (29) angeordnet ist.

3. Elektrische Maschine (1,501,601,701) nach Anspruch 1 oder 2, wobei Innenseiten (32) von Außenwänden (33) des ersten Lagerschilds (2) die Kammer (29) in radialen Richtungen (71,72) begrenzen.

4. Elektrische Maschine (1,501,601,701) nach einem der vorhergehenden Ansprüche, wobei die Außenwände (33) des ersten Lagerschilds (2) mit einer äußeren Berandung (34) des ersten Abschnitts (3) fluchten.

5. Elektrische Maschine (1,501,601,701) nach einem der vorhergehenden Ansprüche, wobei die äußere Tragvorrichtung (23,24) durch Streben (23,24) gebildet ist, die die Durchtrittsöffnungen (25,26) der äußeren Tragvorrichtung (23,24) voneinander trennen.

6. Elektrische Maschine (1,501,601,701) nach Anspruch 5, wobei sich zumindest eine Strebe (24) in radialen Richtungen (71,72) zur Lageraufnahme (22) hin verjüngt.

7. Elektrische Maschine (1,501,601,701) nach einem der vorhergehenden Ansprüche, wobei die Kammer (29) eine Durchtrittsöffnung (27,30) zur Kühlung der elektrischen Maschine (1,501,601,701) aufweist.

8. Elektrische Maschine (1,501,601,701) nach Anspruch 7, wobei an der Durchtrittsöffnung (27,30) der Kammer (29) ein Lüfter (92,93,95) zur Kühlung des ersten Abschnitts (3) angeordnet ist.

9. Elektrische Maschine (701) nach einem der vorhergehenden Ansprüche, wobei eine erste Schutzhaube (111) mit der inneren Tragvorrichtung (21) gestoßen ist.

10. Elektrische Maschine (1,601) nach einem der Ansprüche 7 bis 9, wobei die Durchtrittsöffnung der Kammer (29) die radiale Öffnung (27) ist und die axiale Öffnung (30) verschlossen ist.

11. Elektrische Maschine (501,701) nach einem der Ansprüche 7 bis 9, wobei die Durchtrittsöffnung der Kammer (29) die axiale Öffnung (30) ist und die radiale Öffnung (27) verschlossen ist.

12. Elektrische Maschine (601) nach einem der Ansprüche 7 bis 10, wobei an der Durchtrittsöffnung (27) der Kammer (29) ein Modul (61) zur Kühlung des ersten Abschnitts (3) durch einen Wärmetauscher (62) angeordnet ist und die axiale Öffnung (30) verschlossen ist.

13. Lagerschild (2) für eine elektrische Maschine (1,501,601, 701) nach einem der Ansprüche 1 bis 12, wobei das Lagerschild das erste Lagerschild (2) ist.

14. Serie von elektrischen Maschinen (1,501,601,701) umfassend mindestens eine erste elektrische Maschine (501,701) nach Anspruch 11 und mindestens eine zweite elektrische Maschine (1,601) nach Anspruch 10 oder 12.
